Europäisches Patentamt

**European Patent Office**

**Office européen des brevets**

(19)

(11) Veröffentlichungsnummer : **0 013 398**
**B1**

(12) ## EUROPÄISCHE PATENTSCHRIFT

(45) Veröffentlichungstag der Patentschrift :
23.05.84

(21) Anmeldenummer : **79105287.1**

(22) Anmeldetag : **20.12.79**

(51) Int. Cl.³ : **C 03 B   9/06**, C 03 B 19/00

(54) **Verfahren und Vorrichtung zum Herstellen von mehrwandigen Hohlkörpern, insbesondere aus Glas.**

(30) Priorität : **08.01.79 DE 2900429**

(43) Veröffentlichungstag der Anmeldung :
**23.07.80 Patentblatt 80/15**

(45) Bekanntmachung des Hinweises auf die Patenterteilung : **23.05.84 Patentblatt 84/21**

(84) Benannte Vertragsstaaten :
**AT BE CH DE FR GB IT NL SE**

(56) Entgegenhaltungen :
**AT-B-    8 730**
**DE-A- 2 654 999**
**DE-B- 1 301 448**
**DE-B- 2 220 060**
**DE-B- 2 435 739**
**DE-C-    30 226**
**DE-C- 1 596 556**

(73) Patentinhaber : **Klepsch Kunst GmbH & Co. KG**
**Galerie**
**Spitalgasse 5**
**D-8374 Viechtach (DE)**

(72) Erfinder : **Klepsch, Kristian**
**Spitalstrasse 5**
**D-8374 Viechtach (DE)**

(74) Vertreter : **Bolte, Erich, Dipl.-Ing. et al**
**Hollerallee 73**
**D-2800 Bremen (DE)**

## Beschreibung

Die Erfindung betrifft ein Verfahren und eine Vorrichtung zum Herstellen von Hohlkörpern mit mehreren durch Hohlräume voneinander getrennten, durch Stege oder andere Brücken miteinander verbundenen Wandungen bzw. Wandungsteilen aus unter erhöhter Temperatur gieß- bzw. formbarem Werkstoff, insbesondere Glas, unter Verwendung einer Hohlform, in die der Werkstoff in formbarem Zustand eingebracht wird.

Die Herstellung von mehrwandigen Hohlkörpern aus Werkstoffen, die durch Erhitzen verflüssigt werden bzw. formbar sind, in erkaltetem Zustand jedoch verhältnismäßig starr und gegebenenfalls spröde sind, ist ein bisher in der Technik nur unbefriedigend gelöstes Thema. Dies gilt besonders für mehrwandige Hohlkörper aus Glas, und zwar sowohl für technische Anwendungsbereiche (Einrichtungen für Chemische Laboratorien etc.) wie auch für Kunst- und Gebrauchsgegenstände. Die mehrwandige Ausbildung der Hohlkörper kann demnach technische, aber auch gestalterische, ästhetische Gründe haben.

Aus der DE-C-1 596 556 konnte der Fachmann lernen, daß Kernstücke bekannt sind, die innerhalb eines Formlings aus Glas oder dergleichen eingebettet werden und zur Bildung von geschlossenen Hohlräumen nachträglich durch Auflösen oder Schmelzen zu beseitigen sind. Speziell geht es dort um die Reduzierung des Eigengewichts verhältnismäßig großflächiger bzw. großvolumiger Glasformlinge, z. B. Fernrohrspiegelrohlinge, die durch diesen hergestellt werden. Zu diesem Zweck werden im Inneren des Glaskörpers in sich geschlossene, kammerartige Hohlräume in regelmäßiger Verteilung gebildet. Die Hohlräume sind nicht miteinander verbunden, sondern durch Trennwände ringsherum gegeneinander abgeschlossen. Jeder kammerartige Hohlraum ist jedoch im Bereich einer Rückwand des Glasformlings mit einer kleiner, kanalartigen Öffnung versehen. Diese hat jedoch keine Funktion für den fertigen Glasformling, sondern ist lediglich eine fertigungstechnische Notwendigkeit. In diesem Bereich tritt ein Halteelement durch das Glasmaterial hindurch, welches zur Fixierung eines Füllkörpers (Formkern) innerhalb der Glasform dient. Diese einzelnen, individuell abgestützten Formkerne bestehen aus einem Werkstoff, dessen Schmelzpunkt über demjenigen von Glas liegt und der, wie es in der DE-C-1 596 556 heißt, « aus den Hohlräumen leicht und ohne Beeinträchtigung der Dehnungseigenschaften des Gegenstandes entfernt werden kann ».

Demgegenüber liegt der Erfindung die Aufgabe zugrunde, ein Verfahren und eine Vorrichtung zur Herstellung mehrwandiger Hohlkörper, insbesondere aus Glas, zu schaffen, deren Wandungen durch einzelne, abgegrenzte Stege oder dergleichen miteinander verbunden und deren Außenwandungen gegebenenfalls mit Ausnehmungen und/oder Profilierungen versehen sind.

Verfahrensmäßig wird diese Aufgabe durch die kennzeichnenden Merkmale des Anspruches 1 und vorrichtungsmäßig durch die kennzeichnenden Merkmale des Anspruches 11 gelöst.

Wesentliches Merkmal der Erfindung sind demnach die äußere und innere Hilfsform, die lediglich für einen einmaligen Gebrauch, also die Herstellung eines Formlings (Hohlkörper) geeignet sind. Die Hilfsformen sind bei der Herstellung des Hohlkörpers zwischen bzw. an den Wandungen desselben angeordnet, formen dadurch die den Hilfsformen zugekehrten Bereiche der Wandungen. Die nach Fertigstellung des Hohlkörpers zwischen den Wandungen bzw. zwischen Hohform und Außenwand desselben eingeschlossenen Hilfsformen werden durch chemische und/oder physikalische Behandlung entfernt, und zwar insbesondere durch Auflösen des Materials der Hilfsformen.

Das erfindungsgemäße Verfahren kann mit besonderen Vorzügen bei der Herstellung von Hohlkörpern aus Glas eingesetzt werden. Als Material für die dabei eingesetzten Hilfsformen bietet sich Gips als besonders vorteilhaft an. Es sind aber auch andere vor dem Erhärten gieß- oder formbare Materialien denkbar, die eine möglichst einfache Herstellung der Hilfsform und eine ebenso einfache Beseitigung derselben aus den Hohlräumen des Hohlkörpers ermöglichen. Gips ist bei der Herstellung der Hilfsformen gießfähig, kann deshalb auch Oberflächenstrukturen, Reliefgestaltungen, etc. aufnehmen, die dann eine entsprechende Oberfläche der Wandung bzw. Wandungsteile des Hohlkörpers bewirken. Dies ist vor allem bei der künstlerischen Gestaltung von Gegenständen aus Glas oder dergleichen interessant. Des weiteren kann Gips durch Auflösung in einem Lösungsmittel, nämlich in einer Säure, sehr leicht aus den Hohlräumen entfernt werden, ohne daß dabei die Oberflächen des Hohlkörpers Schaden erleiden. Während der Herstellung des Hohlkörpers durch Anformen von heißem formbarem Werkstoff, insbesondere Glas, sind die Hilfsformen widerstandsfähig gegenüber Druck und den auftretenden Temperaturbelastungen.

Zweckmäßigerweise werden die Wandungen (Außenwandung, Innenwandung) in aufeinanderfolgenden Herstellungsschritten durch Einbringen von Werkstoff und Hilfsformen nacheinander gefertigt, wobei die jeweils zuvor hergestellte Wandung auf einer erhöhten Temperatur gehalten wird, durch die die Verbindung derselben mit zusammen mit der nachfolgend gefertigten Wandung hergestellten Stegen oder dergleichen ermöglicht wird. Entsprechend der Anzahl der Wandungen bzw. der zwischen diesen verbleibenden Hohlräume werden dem Fertigungsfortschritt entsprechend Hilfsformen in den Hohlkörper eingebracht, so daß ein schichten- bzw. wandungsweiser Aufbau des mehrwandigen Hohlkörpers erfolgt.

Der Werkstoff zur Bildung des Hohlkörpers kann auf verschiedene Weise eingebracht werden. Eine Anzahl von Werkstoffen kann in erhitztem Zustand flüssig eingebracht werden. Dies gilt auch für Glas. Dieser Werkstoff kann aber auch in zerkleinertem Zustand in die Form eingefüllt und in dieser dann bis zur Fließfähigkeit erhitzt werden. Des weiteren ist es möglich, die form- bzw. gießfähigen Werkstoffe durch zusätzliche Druckaufwendungen in die auszufüllenden Hohlräume zu bringen, z. B. bei Glas auch nach bekannten Verfahren mit einer Glaszentrifuge.

Einzelheiten des erfindungsgemäßen Verfahrens sowie von Vorrichtungen zur Durchführung des Verfahrens werden nachfolgend anhand der Zeichnungen näher erläutert.

Es zeigen :

Figur 1 Eine Hohlform für die Herstellung eines Hohlkörpers aus insbesondere Glas im Vertikalschnitt, stark vereinfacht,

Figur 2 eine Hohlform mit dem grundsätzlichen Aufbau der Fig. 1 für ein modifiziertes Herstellungsverfahren, ebenfalls im Vertikalschnitt,

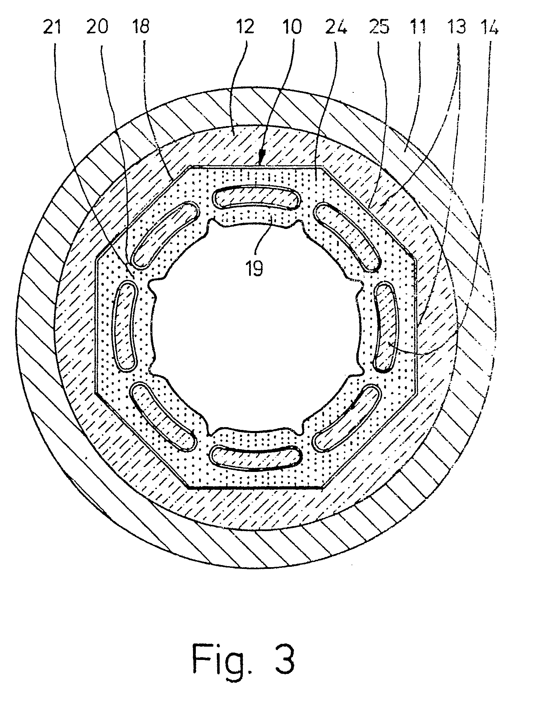

Figur 3 einen Horizontalschnitt durch die Hohlformen gemäß Fig. 1 und 2,

Figur 4 einen Hohlkörper, nämlich ein Glasgefäß in Seitenansicht,

Figur 5 ein weiteres Ausführungsbeispiel eines Glasgefäßes, ebenfalls in Seitenansicht.

Die in den Zeichnungen dargestellten Ausführungsbeispiele für Hohlformen und darin hergestellte Erzeugnisse beziehen sich insbesondere auf die Verarbeitung von Glas als Werkstoff für die Hohlkörper.

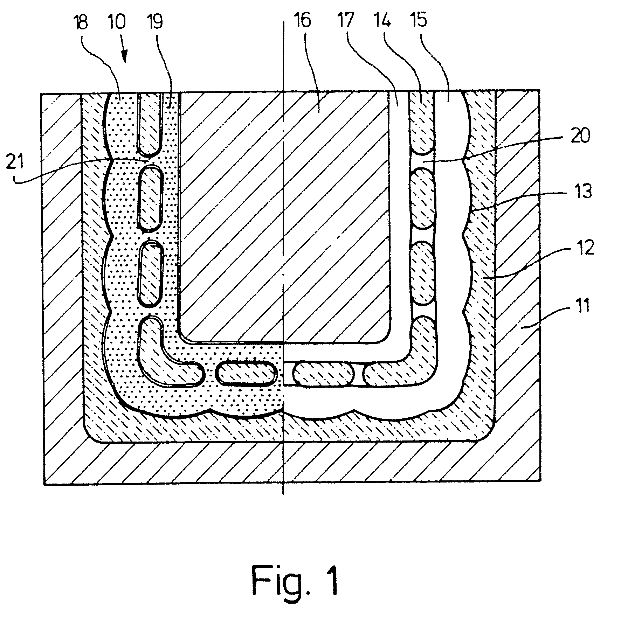

Die in Fig. 1 beispielshaft dargestellte Hohlform zur Herstellung von becherartigen Gefäßen 10 besteht aus einer starren Außenform 11, beispielsweise auch aus Metall. Die genannte Außenform 11 ist so ausgebildet, daß sie mechanisch und thermisch belastbar ist.

An der Innenseite der becherförmigen Außenform 11 ist eine erste, äußere Hilfsform 12 angebracht, die hier vollflächig an der Außenform 11 anliegt. Die Innenseite der Hilfsform 12 ist mit einer der Außenseite des herzustellenden Hohlkörpers, nämlich des Gefäßes 10, entsprechenden Profilierung 13 oder sonstigen Gestaltung versehen.

Mit Abstand von der vorgenannten ersten Hilfsform 12 ist eine zweite, innere Hilfsform 14 angeordnet. Diese ist mit Abstand von der ersten, äußeren Hilfsform 12 angeordnet, derart, daß ein entsprechender becherförmiger Hohlraum 15 gebildet wird. Die innere Hilfsform 14 ist bei dem vorliegenden Beispiel mit Durchbrüchen 20 versehen.

Nochmals mit Abstand von der zweiten, inneren Hilfsform 14 ist als Innenfom ein Formkern 16 angeordnet, der demnach ebenfalls einen becherförmigen Hohlraum 17 gegenüber der Hilfsform 14 begrenzt.

Die genannten Hohlräume 15, 17 (in Fig. 1 in der rechten Hälfte gezeigt) werden in geeigneter Weise mit dem fließfähigen Werkstoff, insbesondere mit Glas, ausgefüllt, derart, daß das Gefäß 10 mit einer Außenwandung 18 und einer mit Abstand von dieser sich erstreckenden Innenwandung 19 gebildet wird. Durch die Durchbrüche 20 in der Hilfsform 14 sind Verbindungen zwischen der Außenwandung 18 und der Innenwandung 19 aus dem Werkstoff des Gefäßes 10 gebildet, und zwar in Gestalt von Stegen 21

Nach Fertigstellung des aus zwei Wandungen 18, 19 bestehenden Gefäßes 10 sind die Hilfsformen 12 und 14 von dem Gefäß 10 zu entfernen. Dies geschieht durch chemische und/ oder physikalische behandlung des Materials der Hilfsformen. Bei Verwendung von Gips für diese Hilfsformen können diese durch ein Lösungsmittel beseitigt werden, insbesondere durch Säure, die in die Hohlräume 15 und 17 eingebracht wird. Die Hilfsformen 12 und 14 werden dadurch rückstandslos beseitigt.

Das vorstehend beschriebene Herstellungsverfahren kann auch insoweit modifiziert werden, daß in einem gesonderten Verfahrenstakt zunächst nur die Außenwandung 18 in einen durch eine entsprechende Innenform (Formkern) begrenzten Hohlraum 15 eingebracht und erst danach die innere Hilfsform 14 in die Außenwandung 18 eingesetzt wird. Hierauf erfolgt dann die Herstellung der Innenwandung 19 mit den Stegen 21 in der beschriebenen Weise. Der Werkstoff der Außenwandung 18 wird dabei auf einer erhöhten Temperatur gehalten, die eine Verbindung der im zweiten Arbeitstakt hergestellten Stege 21 mit dieser Außenwandung 18 ermöglicht.

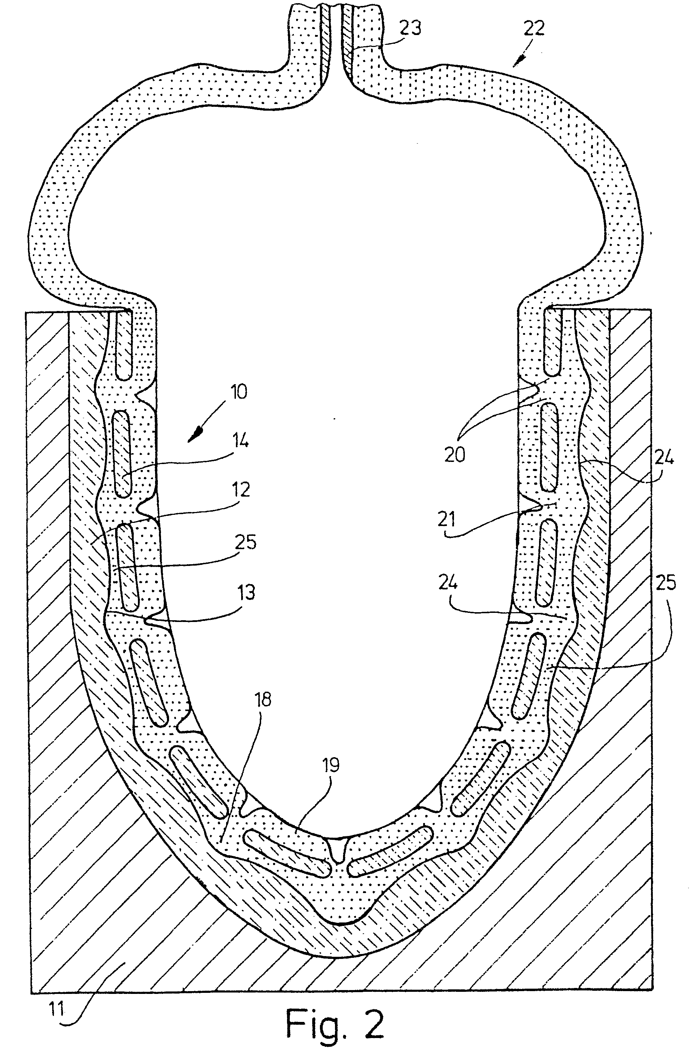

Bei dem Ausführungsbeispiel der Fig. 2 wird im Prinzip mit einem ähnlichen Formenaufbau gearbeitet. Die Innenwandung 19 einschließlich der Stege wird hier jedoch aus einem vorgeformten Glashohlkörper 22 (einem sogenannten Külbel) hergestellt und durch Blasen über ein Blasrohr 23 an die Innenseite der inneren Hilfsform 14 angeformt. Durch entsprechenden Blasdruck werden dabei auch die Stege 21 durch die Durchbrüche 20 hindurchgedrückt.

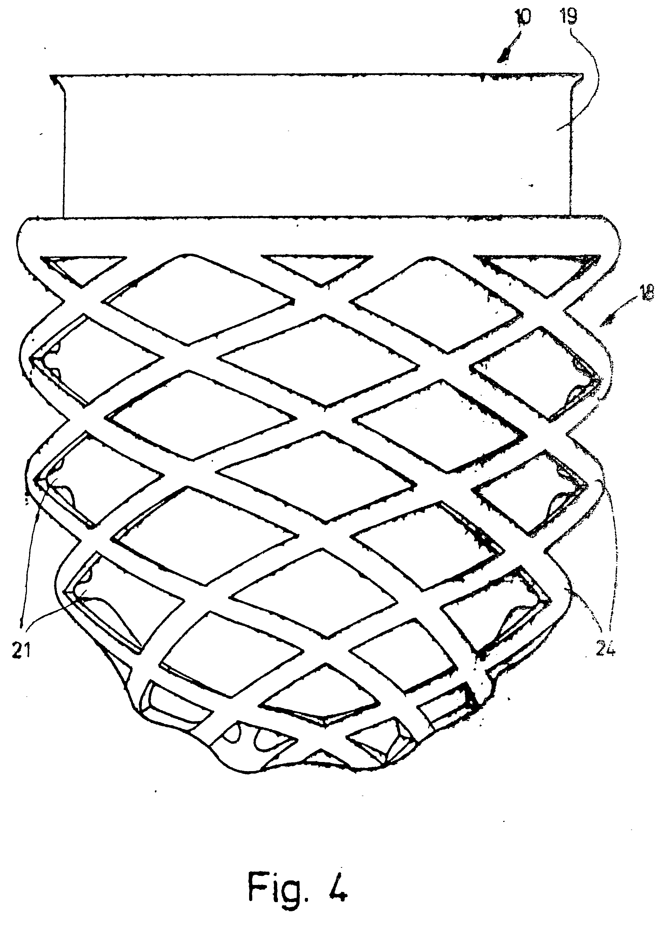

Bei den dargestellten Ausführungsbeispielen ist die Profilierung 13 der ersten, äußeren Hilfsform 12 so gewählt, daß im Bereich benachbart zu den Stegen 21 Materialverdickungen 24 in bzw. an den Formlingen gebildet sind. Die dazwischen liegenden Felder 25 sind demgegenüber dünnwandig. Bei dem fertigen Produkt bilden die Materialverdickungen 24 beispielsweise über Kreuz geführte Rippen (Fig. 4), während das Material im Bereich der dünnwandigen Felder 25 herausgedrückt bzw. durch Schleifen beseitigt ist. Es entsteht dadurch ein Formling beispielsweise gemäß Fig. 4.

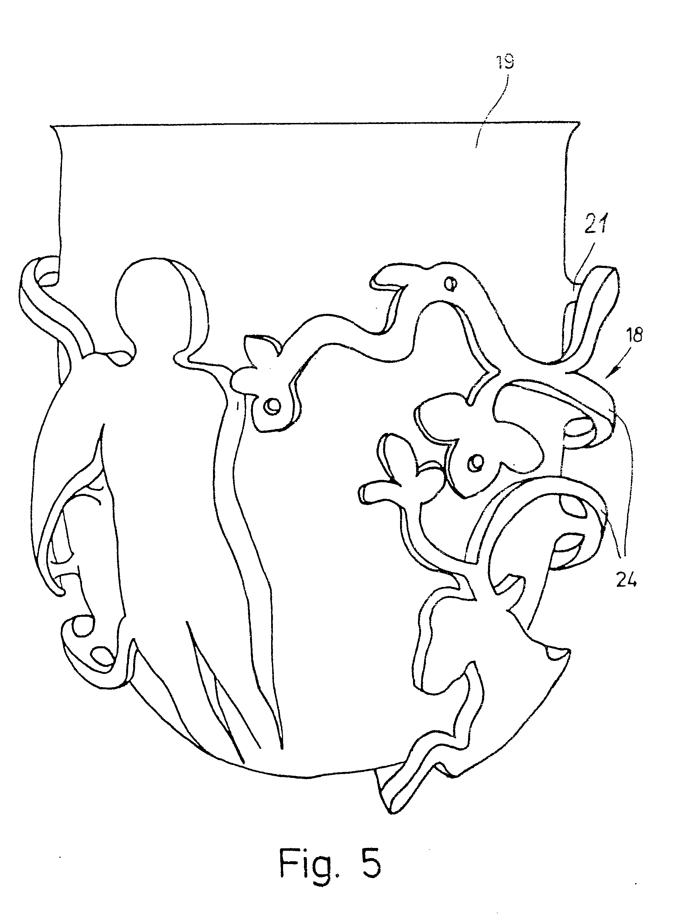

Entsprechende Herstellungsverfahren für die Hilfsformen 12 und 14 ermöglichen jedoch auch abweichende Gestaltungen, beispielsweise derart, daß Wandungsbereiche bzw. Wandungsteile mit besondere geometrischer Gestaltung einschließlich besonderer Oberflächengestaltung die Außenwandung 18 des Gefäßes bilden, während die Innenwandung 19 durchgehend becherförmig oder sonstwie ausgebildet ist. Eine solche Ausführung zeigt die Fig. 5. Die Außenwandung 18 besteht aus einzelnen durch entsprechende Hilfsformen voneinander getrennten Figuren, die — bei Oberflächenprofilierung der Hilfsformen — beidseitig besondere Oberflächenstrukturen aufweisen können.

Die Hilfsformen beispielsweise aus Gips können nach an sich bekannten Verfahren hergestellt werden, z. B. durch Verwendung von aus formbaren Massen gefertigten Vorformen. Als formbare Massen kommen Silikon in Betracht. Dieser Werkstoff ermöglicht beispielsweise auch die Abformung von Figuren, z. B. künstlerischen Plastiken, und die Fertigung einer entsprechenden starren, z. B. aus Gips bestehenden Hilfsform durch Einfüllen dieses Werkstoffes in die Vorform. Letztere wird danach beseitigt, so daß eine dem abzubildenden Original entsprechende Hilfsform hergestellt ist.

Die Hilfsformen können weiterhin mit Werkstoffen unterschiedlicher Zusammensetzung, insbesondere unterschiedlicher Farbgebung zur Herstellung der Außenwandung 18 und Innenwandung 19 beschickt werden. Dabei können auch Gegenstände, Figuren etc. aus anderen Materialien, z. B. Metallstücke, in die Hilfsform derart eingelegt und an dieser fixiert werden, daß sie eine feste Verbindung mit der Außenwandung 18 und/oder Innenwandung 19 des Gefäßes 10 eingehen.

Bei Verwendung von Hilfsformen aus Gips wird zweckmäßigerweise eine Mischung aus Gips und Kreide mit eingelagerten Armierungen, insbesondere mit eingelagerten Glasfasern, verwendet. Dieser Werkstoff bzw. die daraus hergestellte Hilfsform ist in der beschriebenen Weise leicht zu beseitigen, wobei durch das flüssige Lösungsmittel auch die Armierungen aus dem Hohlkörper herausgespült werden. Bie der vorgenannten Zusammensetzung ist die Hilfsform besonders widerstandsfähig gegenüber mechanischen Belastungen.

Die Ausbildung von Strukturen, Profilierungen etc. auf der Oberfläche der Hilfsformen gewährt einen sehr weitgehenden Gestaltungsspielraum in bezug auf die Formlinge. So ist es dadurch möglich, die Felder 25 verhältnismäßig dünnwandig auszubilden, wodurch die nachträgliche Bearbeitung der Außenwandung 18 erleichtert ist (Schleifarbeiten). Des weiteren ist es dadurch möglich, die Wandungen 18 und 19 in unzugänglichen Bereichen, nämlich beispielsweise auf der Innenseite der Außenwandung 18, mit gestalterischen, nämlich dreidimensionalen Strukturen zu versehen.

## Anprüche

1. Verfahren zum Herstellen von Hohlkörpern mit mehreren durch Hohlräume voneinander getrennten, durch Stege oder andere Brücken miteinander verbundenen Wandungen bzw. Wandungsteilen aus unter erhöhter Temperatur gieß- bzw. formbarem Werkstoff, insbesondere Glas, unter Verwendung einer Hohlform, in die der Werkstoff in formbarem Zustand eingebracht wird, gekennzeichnet durch folgende Merkmale :

a) in der Hohlform (Außenform 11) wird eine an dieser anliegende äußere, hohle Hilfsform (12) aus einem wärme- und druckbelastbaren Werkstoff zur Begrenzung der Außenseite einer Außenwandung (18) des Hohlkörpers gebildet,

b) in der äußeren Hilfsform (12) wird bzw. werden eine oder mehrere, mit Durchbrüchen (20) versehene innere Hilfsformen (14) ebenfalls aus einem wärme- und druckbelastbaren Werkstoff mit Abstand von der ersten Hilfsform (12) bzw. mit gegenseitigem Abstand gebildet zur Begrenzung der Innenseite der Außenwandung (18) un der Außenseite einer Innenwandung (19) des Hohlkörpers,

c) in der innerst Hilfsform (14) wird eine Innenform (Formkern 16) mit Abstand von der zweiten Hilfsform (14) angeordnet zur Begrenzung der Innenseite der Innenwandung (19) des Hohlkörpers,

d) in die so gebildeten Hohlräume (15, 17) wird der Werkstoff in fließ- bzw. formbarem Zustand eingebracht und ausgehärtet,

e) nach dem Ausformen des so gebildeten Hohlkörpers werden die Hilfsformen (12, 14) durch chemische und/oder physikalische Behandlung aus den Hohlräumen (15, 17) entfernt.

2. Verfahren nach Anspruch 1, dadurch gekennzeichnet, daß die Hilfsformen (12, 14) aus Gips bestehen.

3. Verfahren nach Anspruch 1 oder 2, dadurch gekennzeichnet, daß Glas zur Herstellung des Hohlkörpers (Gefäß 10) in fließfähigem Zustand in die Hohlräume (15, 17) eingebracht wird und an die Hilfsformen (12, 14) fließt bzw. diese teilweise umfließt.

4. Verfahren nach Anspruch 1 oder 2, dadurch gekennzeichnet, daß Glas für die Herstellung des Hohlkörpers (Gefäß 10) im Rohzustand, insbesondere zerkleinert (pulverförmig), in die Hohlräume (15, 17) eingebracht und in diesen bis zur Verflüssigung erhitzt wird.

5. Verfahren nach Anspruch 1 oder 2, dadurch gekennzeichnet, daß der Werkstoff für die Herstellung des Hohlkörpers (Gefäß 10) in formbarem Zustand in die Hohlräume (15, 17) eingebracht und durch Druckanwendung, z. B. durch Schleudern oder durch Blasluft, zur Anlage an den Hilfsformen (12, 14) gebracht wird.

6. Verfahren nach einem der Ansprüche 1 bis 5, dadurch gekennzeichnet, daß die Wandungen (Außenwandung 18, Innenwandung 19) in aufeinanderfolgenden Herstellungsschritten durch Einbringen von Werkstoff und Hilfsformen nacheinander gefertigt werden, wobei die jeweils zuvor hergestellte Wandung bzw. das Wandungsteil auf einer erhöhten Temperatur gehalten wird, durch die die Verbindung derselben mit zusammen mit der nachfolgend gefertigten Wandung hergestellten Stegen (21) oder dergleichen ermöglicht wird.

7. Verfahren nach Anspruch 6, dadurch gekennzeichnet, daß in eine äußere mechanisch belastbare Hohlform (Außenform 11) eine an dieser anliegende erste Hilfsform (12) eingesetzt, sodann eine erste Wandung bzw. Teilwandung (Außenwandung 18) durch Anformen an die erste, äußere Hilfsform (12) gefertigt, danach eine mit Durchbrüchen (20) versehene zweite Hilfsform (14) in die erste Wandung (Aussenwandung 18) eingebracht und in dieser eine zweite Wandung bzw. ein Wandungsteil (Innenwandung 19) durch Anformen an die zweite Hilfsform (14) gefertigt wird, derart, daß der Werkstoff der Innenwandung (19) durch die Durchbrüche (20) der zweiten Hilfsform (14) bis zur Anlage an der Außenwandung (18) hindurchtritt.

8. Verfahren nach einem der Ansprüche 1 bis 7, dadurch gekennzeichnet, daß Wandungen bzw. Wandungsteile durch vorgeformte Glashohlkörper (22) (Külbel) hergestellt und durch Blasen in einer Hohlform bzw. in einer Hilfsform (14) geformt werden, insbesondere unter Bildung von durch Durchbrüche (20) hindurchtretenden Stegen (21).

9. Verfahren nach einem der Ansprüche 1 bis 8, dadurch gekennzeichnet, daß Teilbereiche (Felder 25) der Wandung bzw. Wandungsteile nach der Herstellung durch Ausbrechen und/oder Ausschleifen beseitigt werden.

10. Verfahren nach einem der Ansprüche 1 bis 9, dadurch gekennzeichnet, daß vorgefertigte Teile, z. B. aus Metall, in die Hohlräume (15, 17) eingebracht und derart an den Hilfsformen (12, 14) befestigt werden, daß nach dem Beseitigen derselben die betreffenden Teile mit der Wandung bzw. dem Wandungsteil verbunden sind.

11. Vorrichtung zur Durchführung des Verfahrens nach einem der Ansprüche 1 bis 10, dadurch gekennzeichnet, daß in einer starren Außenform (11), insbesondere aus Metall, eine an dieser anliegende Hilfsform (12) aus auflösbarem Material und mit Abstand von dieser wenigstens eine weitere Hilfsform (14) mit Durchbrüchen angeordnet sind und daß zum Formen der Innenseite der Innenwandung (19) bzw. eines inneren Wandungsteils die Innenform als herausnehmbarer Formkörper (16) mit Abstand von der innenliegenden Hilfsform (14) angeordnet ist.

12. Vorrichtung nach Anspruch 11, dadurch gekennzeichnet, daß die Hilfsformen (12, 14) auf ihren Oberflächen mit Profilierungen, Strukturen etc. versehen sind, derart, daß die Außenwandung (18) und/oder Innenwandung (19) mit entsprechenden Strukturen, Profilierungen etc. ausgebildet sind.

## Claims

1. Process for producing hollow bodies with a plurality of walls or wall parts separated from one another by cavities and interconnected by webs or other bridges and made from a material which is castable or mouldable under elevated temperature and more particularly glass using a hollow mould, into which the material is introduced in the mouldable state, characterized by the following features :

a) an outer, hollow auxiliary mould (12) made from a heat-loadable and pressure-loadable material is placed in engaging manner in the hollow mould (outer mould 11) for defining the outside of an outer wall (18) of a hollow body,

b) one or more inner auxiliary moulds (14), provided with openings (20) and also made from a heat-loadable and pressure-loadable material are arranged in spaced manner or with a reciprocal spacing within the first outer auxiliary mould (12) for defining the inside of the outer wall (18) and the outside of an inner wall (19) of the hollow body,

c) an inner mould (mould core 16) is arranged in spaced manner within the second or innermost auxiliary mould (14) for defining the inside of the inner wall (19) of the hollow body,

d) the material is introduced in a flowable or mouldable state into the thus formed cavities (15, 17) and is cured,

e) after curing the thus formed hollow body, the auxiliary moulds (12, 14) are removed from the cavities (15, 17) by chemical and/or physical treatment.

2. Process according to claim 1, characterized in that the auxiliary moulds (12, 14) are made from gypsum.

3. Process according to claims 1 or 2, characterized in that for producing the hollow body (vessel 10) glass is introduced into the cavities (15, 17) in a flowable state and flows on the auxiliary moulds (12, 14), or partly flows round them.

4. Process according to claims 1 or 2, characterized in that the glass for producing the hollow body (vessel 10) is introduced into the cavities (15, 17) in the raw state, particularly comminuted (pulverulent) and is heated therein up to liquefaction.

5. Process according to claims 1 or 2, characterized in that the material for producing the hollow body (vessel 10) is introduced into the cavities (15, 17) in the mouldable state and is engaged on the auxiliary moulds (12, 14) by pressure application, e. g. by centrifuging or by blow air.

6. Process according to one of the claims 1 to 5, characterized in that the walls (outer wall 18, inner wall 19) are successively produced in successive production stages by introducing material and auxiliary moulds, the in each case previously produced wall or wall part being kept at an elevated temperature permitting the connection thereof with the webs (21) or the like produced together with the next wall.

7. Process according to claim 6, characterized in that a first auxiliary mould (12) is placed in engaging manner in an outer, mechanically loadable hollow mould (outer mould 11), then a first wall or partial wall (outer wall 18) is produced by shaping onto the first, outer auxiliary mould (12), a second auxiliary mould (14) provided with openings (20) is then placed in the first wall (outer wall 18) and in the latter a second wall or wall part (inner wall 19) is produced by shaping onto the second auxiliary mould (14), in such a way that the material of the inner wall (19) passes through the openings (20) of the second auxiliary mould (14) up to engagement with the outer wall (18).

8. Process according to one of the claims 1 to 7, characterized in that the walls or wall portions are produced by prefabricated glass hollow bodies (22) (parisons) and are shaped by blowing in a hollow mould or in an auxiliary mould (14), particularly accompanied by the formation of webs (21) passing through openings (20).

9. Process according to one of the claims 1 to 8, characterized in that partial areas (fields 25) of the wall or wall portions can be removed after production by breaking and/or grinding out.

10. Process according to one of the claims 1 to 9, characterized in that prefabricated parts, e. g. of metal are placed in the cavities (15, 17) and are fixed to the auxiliary moulds (12, 14) in such a way that after the elimination thereof, the particular parts are connected to the wall or the wall part.

11. Apparatus for performing the process according to one of the claims 1 to 10, characterized in that an auxiliary mould (12) made from dissolvable material is placed in engaging manner in a rigid outer mould (11), particularly made from metal, together with at least one further auxiliary mould provided with openings and spaced from auxiliary mould (12), and that for moulding the inside of the inner wall (19) or an inner wall part, as a removable moulded body (16), the inner mould is arranged in spaced manner from the inner auxiliary mould (14).

12. Apparatus according to claim 11, characterized in that the surfaces of the auxiliary moulds (12, 14) are provided with profiles, structures, etc, in such a way that the outer wall (18) and/or inner wall (19) are constructed with corresponding structures, profiles, etc.

**Revendications**

1. Procédé de fabrication de corps creux, en matière coulable ou moulable à température élevée, en particulier en verre, comportant une pluralité de parois, ou parties de paroi, reliées entre elles par des entretoises, ou autres ponts, séparées les unes des autres par des espaces vides, en utilisant une empreinte dans laquelle la matière est introduite à l'état moulable, caractérisé par les caractéristiques suivantes :
   a) dans l'empreinte (forme extérieure 11), est formée une forme auxiliaire (12) creuse, externe, accolée à cette empreinte, en une matière pouvant supporter la chaleur et la pression pour délimiter le côté extérieur d'une paroi externe (18) du corps creux.

   b) dans la forme auxiliaire externe (12), est (ou sont) formée une (ou plusieurs) forme(s) auxiliaire(s) (14) interne(s) munie(s) de percements (20), également en une matière pouvant supporter la chaleur et la pression, à distance de la première forme auxiliaire (12) (ou à distance les unes des autres) pour délimiter le côté interne de la paroi externe (18) et le côté externe d'une paroi intérieure (19) du corps creux.

   c) dans la forme auxiliaire (14) la plus à l'intérieur, est disposée une forme intérieure (noyau de moule 16) à distance de la deuxième forme extérieure (14), pour délimiter le côté interne de la paroi intérieure (19) du corps creux.

   d) dans les espaces creux (15, 17) ainsi formés, la matière est introduite à l'état coulable ou moulable et y est durcie.

   e) après le démoulage du corps creux ainsi formé, les formes auxiliaires (12, 14) sont enlevées des espaces creux (15, 17) par traitement chimique et/ou physique.

2. Procédé selon la revendication 1, caractérisé par le fait que les formes auxiliaires (12, 14) sont en gypse.

3. Procédé selon la revendication 1 ou 2, caractérisé par le fait qu'on introduit dans les espaces creux (15, 17), à l'état coulable du verre pour la fabrication du corps creux (récipient 10) et il coule contre les formes auxiliaires (12, 14) ou les contourne partiellement.

4. Procédé selon la revendication 1 ou 2, caractérisé par le fait qu'on introduit dans les espaces creux (15, 17), pour la fabrication du corps creux (récipient 10), du verre à l'état brut, notamment broyé (pulvérisé), et on l'y chauffe jusqu'à fluidification.

5. Procédé selon la revendication 1 ou 2, caractérisé par le fait que la matière pour la fabrication du corps creux (récipient 10) est introduite dans les espaces creux (15, 17) à l'état moulable et, par utilisation de pression, par exemple par centrifugation ou air soufflé, est amenée à se déposer contre les formes auxiliaires (12, 14).

6. Procédé selon l'une des revendications 1 à 5, caractérisé par le fait que les parois (paroi externe 18, paroi interne 19) sont faites l'une après l'autre, en des étapes de fabrication successives, par introduction de matière et de formes auxiliaires, chacune des parois, ou parties de paroi, fabriquées d'abord étant maintenues à une température élevée, grâce à laquelle est facilitée la liaison de celle-ci avec l'entretoise (21), ou élément analogue, fabriquée avec la paroi faite ensuite.

7. Procédé selon la revendication 6, caractérisé par le fait que, dans un moule creux extérieur (forme extérieure 11) pouvant supporter des effets mécaniques, est introduite une première forme auxiliaire (12) accolée audit moule, de sorte qu'une première paroi, ou partie de paroi, (paroi externe 18) est obtenue par moulage sur la première forme auxiliaire externe (12), puis une seconde forme auxiliaire (14), munie de percements (20) est introduite dans la première paroi (paroi externe 18) et, dans celle-ci, est faite une deuxième paroi, ou partie de paroi, (paroi interne 19), par moulage sur la deuxième forme auxiliaire (14), de sorte que la matière de la paroi interne (19) traverse les percements (20) de la deuxième forme auxiliaire (14) jusqu'à se déposer sur la paroi externe (18).

8. Procédé selon l'une des revendications 1 à 7, caractérisé par le fait que des parois, ou parties de paroi, sont obtenues par un corps creux en verre (22) (paraison) et formées par soufflage dans un moule creux ou une forme auxiliaire (14), notamment en formant des entretoises (21) passant par des percements (20).

9. Procédé selon l'une des revendications 1 à 8, caractérisé par le fait que des zones partielles (champ 25) des parois, ou parties de paroi, sont éliminées après la fabrication, par arrachage et/ou meulage.

10. Procédé selon l'une des revendications 1 à 9, caractérisé par le fait que des parties préfabriquées, par exemple en métal, sont introduites dans les espaces (15, 17) et sont fixées aux formes auxiliaires (12, 14) de façon qu'après l'élimination de celles-ci, les parties correspondantes sont reliées à la paroi ou partie de paroi.

11. Dispositif pour la mise en œuvre du procédé selon l'une des revendications 1 à 10, caractérisé par le fait que, dans un moule extérieur rigide (11), en particulier en métal, sont disposées une forme auxiliaire (12) en matière dissoluble, accolée à ce moule, et, à distance de cette forme, au moins une autre forme auxiliaire (14) présentant des percements, et que, pour former la face intérieure de la paroi interne (19) ou d'une partie de paroi interne, la forme intérieure est disposée, en tant que corps de moule (16) enlevable, à distance de la forme auxiliaire (14) située à l'intérieur.

12. Dispositif selon la revendication 11, caractérisé par le fait que les formes auxiliaires (12, 14) sont munies, sur leur surface, d'éléments profilés, structurés etc... de façon que les parois externes (18) et/ou les parois internes (19) présentent des éléments structurés, profilés etc... correspondants.

Fig. 1

Fig. 2

Fig. 3

Fig. 4

Fig. 5